# EUROPEAN PATENT APPLICATION

(11) **EP 4 020 010 A1**
(43) Date of publication of application: **29.06.2022**
(21) Application number: 21208591.4
(22) Date of filing: 16.11.2021
(51) Int. Cl.: G01S 13/74, G01S 13/76, G01S 13/82

(54) **SPATIAL LOCATION POSITIONING METHOD AND SYSTEM FOR ELEVATOR AND ELEVATOR**

(30) Priority: 22.12.2020 CN 202011525408
(71) Applicant: Otis Elevator Company, Farmington CT 06032 (US)
(72) Inventor: Qi, Fu, Shanghai, 200335 (CN); Li, Bichun, Shanghai, 200335 (CN); Wang, Shenhong, Shanghai, 200335 (CN)
(74) Representative: Dehns

(57) **Abstract**

The present disclosure relates to a spatial location positioning method for an elevator, a spatial location positioning system for an elevator, and an elevator. The spatial location positioning method for the elevator comprises the steps of: transmitting (S11) near-field wireless communication signals in preset areas of the elevator; receiving (S12) response signals of a target object to the near-field wireless communication signals, and analyzing signal AOA (angle of arrival) information from the response signals; and determining (S13) current location of the target object according to the signal AOA information. The solutions of the disclosure can quickly and accurately determine the current location of the target object in the elevator area, which is for example helpful in improving the personal safety of elevator maintenance personnel and the like, and realizing more intelligent functions such as seamless elevator calling.

## Description

### FIELD OF THE INVENTION

The present disclosure relates to the technical field of elevators, and in particular to a spatial location positioning method for an elevator, a spatial location positioning system for an elevator, and an elevator.

### BACKGROUND OF THE INVENTION

At present, various elevators have received very wide applications; especially, installation of them in environments such as high-rise buildings and large buildings can bring great convenience to users. Generally, elevator equipment has a large space area, and in some cases, there is a need for positioning personnel and objects therein. For example, when workers need to perform operations such as equipment repair and parts replacement along a long and narrow elevator hoistway, if their current locations can be positioned timely and accurately, it would be very advantageous from the perspective of safety.

In this regard, explorations haven been made and many positioning means have been provided in the prior art, such as measuring the distance between a signal point and a receiving point according to the strength characteristics of the received signal strength indication (RSSI) to achieve positioning. However, these existing positioning means still have problems such as relatively complex positioning processing, poor accuracy and timeliness, the need for additional equipment investment, and high operating costs.

### SUMMARY OF THE INVENTION

In view of the foregoing, the present disclosure provides a spatial location positioning method for an elevator, a spatial location positioning system for an elevator, and an elevator, thereby solving or at least alleviating one or more of the above-mentioned problems and other problems in the prior art.

Firstly, according to a first aspect of the present disclosure, a spatial location positioning method for an elevator is provided, which comprises the steps of:
transmitting near-field wireless communication signals in preset areas of the elevator;
receiving response signals of a target object to the near-field wireless communication signals, and analyzing signal AOA (angle of arrival) information from the response signals; and
determining current location of the target object according to the signal AOA information.

In the spatial location positioning method for the elevator according to the present disclosure, optionally, near-field wireless communication with the target object is performed at least based on a first position, a second position and a third position, wherein the first position, the second position and the third position are respectively arranged in different spatial planes in the preset areas.

In the spatial location positioning method for the elevator according to the present disclosure, optionally, the transmitted near-field wireless communication signals cover at least a part of an elevator hoistway area and/or at least a part of an elevator waiting area.

In the spatial location positioning method for the elevator according to the present disclosure, optionally, the near-field wireless communication signals are transmitted in the preset areas with a preset period.

In the spatial location positioning method for the elevator according to the present disclosure, optionally, the near-field wireless communication with the target object uses at least one of Bluetooth Low Energy (BLE), ZIGBEE, WIFI, Radio Frequency (RF) and infrared communication.

In the spatial location positioning method for the elevator according to the present disclosure, optionally, the target object includes a mobile terminal or a wearable device.

In the spatial location positioning method for the elevator according to the present disclosure, optionally, the spatial location positioning method further comprises the step of transmitting the determined current location of the target object to a server terminal locally disposed in the elevator or disposed on a cloud platform for processing.

In the spatial location positioning method for the elevator according to the present disclosure, optionally, the processing includes using the current location of the target object to form an elevator-calling request, and the elevator-calling request includes a lobby door calling request and a destination calling request.

Secondly, according to a second aspect of the present disclosure, a spatial location positioning system for an elevator is also provided, which includes:
near-field wireless communication devices configured to transmit near-field wireless communication signals in preset areas of the elevator for performing near-field wireless communication with a target object; and
a processor connected to the near-field wireless communication devices and configured to execute the following steps:
   analyzing signal AOA (angle of arrival) information from response signals of the target object to the near-field wireless communication signals obtained by the near-field wireless communication devices; and
   determining current location of the target object according to the signal AOA information.

In the spatial location positioning system for the elevator according to the present disclosure, optionally, the near-field wireless communication devices are arranged at least in a first position, a second position and a third position to perform near-field wireless communication with the target object, and the first position, the second position and the third position are respectively arranged in different spatial planes in the preset areas.

In the spatial location positioning system for the elevator according to the present disclosure, optionally, the near-field wireless communication device is arranged such that the near-field wireless communication signal covers at least a part of an elevator hoistway area and/or at least a part of an elevator waiting area.

In the spatial location positioning system for the elevator according to the present disclosure, optionally, the processor is configured to control the near-field wireless communication devices to transmit the near-field wireless communication signals in the preset areas with a preset period.

In the spatial location positioning system for the elevator according to the present disclosure, optionally, the near-field wireless communication with the target object uses at least one of Bluetooth Low Energy (BLE), ZIGBEE, WIFI, Radio Frequency (RF) and infrared communication.

In the spatial location positioning system for the elevator according to the present disclosure, optionally, the target object includes a mobile terminal or a wearable device.

In the spatial location positioning system for the elevator according to the present disclosure, optionally, the processor is further configured to transmit the determined current location of the target object to a server terminal locally disposed in the elevator or disposed on a cloud platform for processing.

In the spatial location positioning system for the elevator according to the present disclosure, optionally, the processing comprises using the current location of the target object to form an elevator-calling request, the elevator-calling request comprising a lobby door calling request and a destination calling request.

In addition, according to a third aspect of the present disclosure, an elevator is also provided, which comprises any one of the spatial location positioning system for an elevator as described above.

From the following detailed description as combined with the accompanying drawings, the principles, features, characteristics, advantages and the like of the technical solutions according to the present disclosure will be clearly understood. For example, as compared with the prior art, the technical solutions of the present disclosure can quickly and accurately determine the current location of the target object in the elevator area, which is for example helpful in improving the personal safety of elevator maintenance personnel and the like, and realizing more intelligent functions such as seamless elevator calling. The present disclosure has strong practicability and low use cost, and can effectively enhance the competitiveness of elevator products.

### BRIEF DESCRIPTION OF THE DRAWINGS

The technical solutions of the present disclosure will be described in further detail below with reference to the accompanying drawings and embodiments. However, it should be understood that these drawings are designed merely for the purpose of explanation and only intended to conceptually illustrate the structural configurations described herein, and are not required to be drawn to scale.

FIG. 1 is a schematic flowchart of an embodiment of a spatial location positioning method for an elevator according to the present disclosure.

FIG. 2 is a schematic view of a scene in which an embodiment of a spatial location positioning system for an elevator of the present disclosure is applied to position workers in an elevator hoistway.

### DETAILED DESCRIPTION OF THE EMBODIMENT(S) OF THE INVENTION

First, it should be noted that the steps, components, characteristics, advantages and the like of the spatial location positioning method for an elevator, the spatial location positioning system for an elevator, and the elevator according to the present disclosure will be described below by way of example. However, it should be understood that neither of the descriptions should be understood as limiting the present disclosure in any way.

In addition, for any single technical feature described or implied in the embodiments mentioned herein, or any single technical feature shown or implied in individual drawings, the present disclosure still allows for any combination or deletion of these technical features (or equivalents thereof) without any technical obstacle. Therefore, it should be considered that these more embodiments according to the present disclosure are also within the scope recorded in this document. In addition, for the sake of simplicity, general items that are already known to those skilled in the art such as near-field wireless communication and BLE will not be described in detail herein.

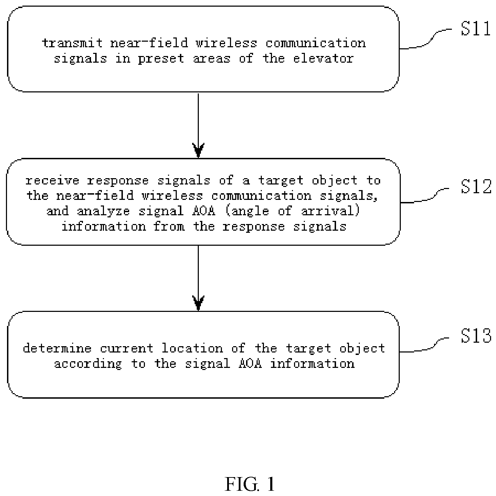

FIG. 1 exemplarily shows a processing flow of an embodiment of a spatial location positioning method for an elevator according to the present disclosure. In this embodiment, the spatial location positioning method may include the following steps:
First, in step S11, in preset areas of the elevator (for example, an elevator hoistway, a lobby, or an elevator waiting area of the floor, etc.), any one or more feasible near-field wireless communication means such as BLE, ZIGBEE, WIFI, RF and infrared communication may be used to transmit near-field wireless communication signals outward, so that a near-field wireless communication network capable of covering all or part of the preset areas can be formed according to different practical application needs, thus enabling target objects within the signal coverage to receive the above near-field wireless communication signals to form a near-field wireless communication connection. As to the target objects, they may include, but are not limited to, for example, mobile terminals (such as mobile phones, tablet computers), wearable devices and the like which have corresponding near-field wireless communication functions, or they may also be regarded as people, animals or objects which have carried devices with near-field wireless communication function.

Next, as shown in step S12, after receiving the near-field wireless communication signals, the target object will respond to the near-field wireless communication signals and transmit corresponding response signals; by receiving the response signals and by analyzing, signal AOA (angle of arrival) information contained therein can be obtained. Since this type of AOA information is associated with the current location of the target object, it can be used for spatial positioning of the target object.

Then, in step S13, the current location of the target object can be determined according to the signal AOA information obtained after the above analyzing, and the whole process is very fast, accurate and efficient.

As an example, in some embodiments, the near-field wireless communication signals may be each sent out from three or more locations respectively arranged in different spatial planes in the preset areas; then, after the target object makes a response to these signals respectively and generates corresponding response signals, by receiving these response signals and analyzing each signal AOA information contained in these response signals respectively, the current spatial location of the target object can be determined more accurately with all the information combined.

It should be pointed out that in some other embodiments, the near-field wireless communication signals may be sent out from only one position or two different positions in the preset areas; by establishing the above described near-field wireless communication connection with the target object, the current location of the target object can also be determined.

It should be understood that without departing from the spirit of the present disclosure, the method of the present disclosure allows for flexible settings, changes and adjustments to aspects such as the specific transmission location, transmission power, transmission period, coverage area and the like of the near-field wireless communication signals according to different application needs, without imposing any restrictions on these aspects.

In addition, as an optional situation, steps may also be added to some embodiments of the method of the present disclosure. Specifically, for example, the determined current location of the target object may be transmitted in a wired and/or wireless manner to a server terminal locally disposed in the elevator or disposed on a cloud platform for any possible processing; for example, since the above current location information actually corresponds to the current location of the carrier of the target object (for example, it is found that the trend of the current moving trajectory is gradually approaching the elevator door), it can be directly used to form an elevator-calling request (such as a lobby door calling request, a destination calling request, etc.). Therefore, in some applications, the user does not need to actively operate the elevator button to start the elevator-calling request, and the seamless elevator calling service can be realized very efficiently, conveniently and intelligently, which is very helpful for improving the use experience for elevator users, and enhancing the function and competitiveness of elevator products.

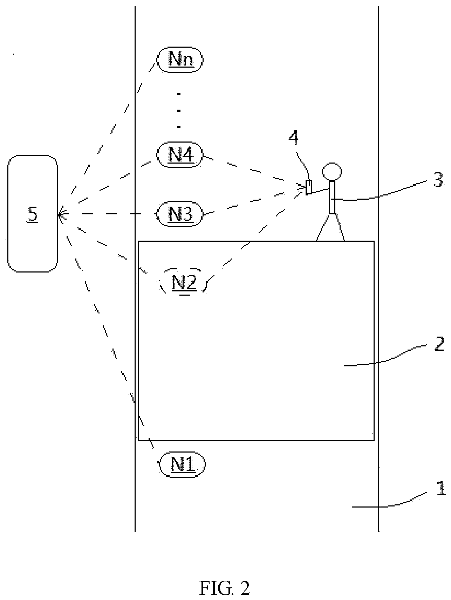

According to the design concept of the present disclosure, a spatial location positioning system for an elevator is further provided. As an illustrative example, FIG. 2 only schematically shows a scene in which an embodiment of a spatial location positioning system for an elevator of the present disclosure is applied to spatially position workers in an elevator hoistway.

As shown in FIG. 2, the embodiment of the spatial location positioning system for the elevator may include near-field wireless communication devices N1, N2, N3, N4...Nn and a processor 5.

As an illustrative description, the above near-field wireless communication devices N1, N2, N3, N4...Nn may be arranged at different positions in an elevator hoistway 1 according to application needs. For example, one or more near-field wireless communication devices may be arranged respectively for different floors, so that they can form a desired near-field wireless communication network capable of covering all or part of the areas of the elevator hoistway 1 and that response signals fed back from the outside can be received. In practical applications, the near-field wireless communication devices may be set to use one or more near-field wireless communication means (such as BLE, ZIGBEE, WIFI, RF, infrared communication, etc.) to communicate and interact with the outside. Therefore, in some applications, the near-field wireless communication devices in this document may also be directly referred to as BLE devices, RF devices, etc. In the present disclosure, there is no need to elaborate the components, modules or units owned by such near-field wireless communication devices themselves.

The processor 5 is connected to the near-field wireless communication devices N1, N2, N3, N4...Nn, and may be used to control one or more of the above-mentioned near-field wireless communication devices to transmit near-field wireless communication signals in the elevator hoistway 1. By analyzing corresponding signal AOA information from the response signals coming from the outside target object and received by the near-field wireless communication devices, the spatial location of the target object at this point can be determined according to the signal AOA information.

It should be understood that the processor 5 may be implemented by using hardware, software, or a combination thereof, and it may also be connected to an elevator management system or used as a part of the elevator management system. In addition, it should also be understood that in some applications, the processor 5 may also be optionally set to have more functions; for example, the determined current location of the target object may be transmitted to the server terminal for any possible subsequent processing. This type of server terminal may be directly disposed locally in the elevator, or it may also be disposed on a cloud platform. As an example, the above-mentioned subsequent processing performed on the server terminal may be using the current location of the target object to form an elevator-calling request, which has been introduced in the above and will not be described repeatedly herein.

By configuring the above-mentioned near-field wireless communication devices N1, N2, N3, N4...Nn and the processor 5, when the worker 3 performs operations on an elevator car 2 such as maintenance, inspection, part replacement along the elevator hoistway 1, he may carry a mobile terminal 4 (or any suitable form of wearable device such as glasses, helmet, coat, etc.) with himself as the target object mentioned herein, so that the current location of the worker 3 in the elevator hoistway 1 can be accurately determined in real time during work. For example, FIG. 2 exemplarily shows that at this point, the near-field wireless communication devices N2, N3 and N4 adjacent to the worker 3 (i.e., the mobile terminal 4) can perform near-field wireless communication and interaction with the mobile terminal 4 via three different wireless links; then, by analyzing the corresponding AOA information of three signals, the travel trajectory of the worker 3 can be continuously tracked and accurately grasped in real time. In this way, even if an accident occurs during work, it is possible to quickly determine the spatial location of the worker 3 at this point, and then take timely rescue countermeasures, thereby effectively ensuring the safety of people and equipment and avoiding unexpected accidents. Therefore, the safety management level of elevators is improved.

Although multiple near-field wireless communication devices are shown at the same time in the example in FIG. 2, it should be understood that for the spatial location positioning system for the elevator according to the present disclosure, the number, arrangement locations, powers, sizes, expected coverage area and the like of the near-field wireless communication devices may each be set, selected and adjusted according to actual application needs. For example, in some applications, only one or two near-field wireless communication devices may be arranged at suitable locations of the elevator. In addition, for the user, it is also possible for him to carry two or more mobile terminals or wearable devices used as target objects at the same time, so that even if one of them fails, is damaged or lost, etc., other target objects can maintain communication with the near-field wireless communication devices. This redundant configuration can further enhance the safety and reliability of the system.

According to another technical solution of the present disclosure, an elevator is also provided. Specifically, the elevator can be equipped with the spatial location positioning system for the elevator designed and provided according to the present disclosure. For example, the spatial location positioning system can be arranged at a suitable location of the elevator according to specific application needs, so that the current location of the target object can be determined timely and accurately, which can effectively ensure the safety of people and equipment and can provide intelligent application functions with better user experience such as seamless elevator calling, so that these technical advantages of the above-discussed solutions of the present disclosure over the prior art can be exhibited.

The spatial location positioning method for an elevator, the spatial location positioning system for an elevator, and the elevator according to the present disclosure have been elaborated above in detail by way of example only. These examples are merely used to illustrate the principles and embodiments of the present disclosure, rather than limiting the present disclosure. Various modifications and improvements can be made by those skilled in the art without departing from the spirit and scope of the present disclosure. Therefore, all equivalent technical solutions should fall within the scope of the present disclosure and be defined by the claims of the present disclosure.

## Claims

1. A spatial location positioning method for an elevator, comprising the steps of:
transmitting near-field wireless communication signals in preset areas of the elevator;
receiving response signals of a target object to the near-field wireless communication signals, and analyzing signal AOA (angle of arrival) information from the response signals; and
determining current location of the target object according to the signal AOA information.

2. The spatial location positioning method for the elevator according to claim 1, wherein near-field wireless communication with the target object is performed at least based on a first position, a second position and a third position, and the first position, the second position and the third position are respectively arranged in different spatial planes in the preset areas.

3. The spatial location positioning method for the elevator according to claim 1 or 2, wherein the transmitted near-field wireless communication signals cover at least a part of an elevator hoistway area and/or at least a part of an elevator waiting area.

4. The spatial location positioning method for the elevator according to any preceding claim, wherein the near-field wireless communication signals are transmitted in the preset areas with a preset period.

5. The spatial location positioning method for the elevator according to any preceding claim, wherein the near-field wireless communication with the target object uses at least one of Bluetooth Low Energy (BLE), ZIGBEE, WIFI, Radio Frequency (RF) and infrared communication.

6. The spatial location positioning method for the elevator according to any preceding claim, wherein the target object comprises a mobile terminal or a wearable device.

7. The spatial location positioning method for the elevator according to any preceding claim, further comprising the step of transmitting the determined current location of the target object to a server terminal locally disposed in the elevator or disposed on a cloud platform for processing.

8. The spatial location positioning method for the elevator according to claim 7, wherein the processing comprises using the current location of the target object to form an elevator-calling request, the elevator-calling request comprising a lobby door calling request and a destination calling request.

9. A spatial location positioning system for an elevator, comprising:
near-field wireless communication devices configured to transmit near-field wireless communication signals in preset areas of the elevator for performing near-field wireless communication with a target object; and
a processor connected to the near-field wireless communication devices and configured to execute the following steps:
analyzing signal AOA (angle of arrival) information from response signals of the target object to the near-field wireless communication signals obtained by the near-field wireless communication devices; and
determining current location of the target object according to the signal AOA information.

10. The spatial location positioning system for the elevator according to claim 9, wherein the near-field wireless communication devices are arranged at least in a first position, a second position and a third position to perform near-field wireless communication with the target object, and the first position, the second position and the third position are respectively arranged in different spatial planes in the preset areas.

11. The spatial location positioning system for the elevator according to claim 9 or 10, wherein the near-field wireless communication devices are arranged such that the near-field wireless communication signals cover at least a part of an elevator hoistway area and/or at least a part of an elevator-waiting area.

12. The spatial location positioning system for the elevator according to any of claims 9 to 11, wherein the processor is configured to control the near-field wireless communication devices to transmit the near-field wireless communication signals in the preset areas with a preset period.

13. The spatial location positioning system for the elevator according to any of claims 9 to 12, wherein the near-field wireless communication with the target object uses at least one of Bluetooth Low Energy (BLE), ZIGBEE, WIFI, Radio Frequency (RF) and infrared communication; and/or wherein the target object comprises a mobile terminal or a wearable device.

14. The spatial location positioning system for the elevator according to any of claims 9 to 13, wherein the processor is further configured to transmit the determined current location of the target object to a server terminal locally disposed in the elevator or disposed on a cloud platform for processing; and optionally wherein the processing comprises using the current location of the target object to form an elevator-calling request, the elevator-calling request comprising a lobby door calling request and a destination calling request.

15. An elevator, comprising the spatial location positioning system for the elevator according to any one of claims 9 to 14.
